# EUROPÄISCHE PATENTSCHRIFT

(11) **EP 1 254 501 B1**
(45) Veröffentlichungstag und Bekanntmachung des Hinweises auf die Patenterteilung: **04.02.2004**
(21) Anmeldenummer: 00981125.8
(22) Anmeldetag: 21.12.2000
(51) Int. Cl.: H02K 15/10, H02K 15/12

(54) **VERFAHREN ZUR HERSTELLUNG EINER HOCHWERTIGEN ISOLIERUNG VON ELEKTRISCHEN LEITERN ODER LEITERBÜNDELN ROTIERENDER ELEKTRISCHER MASCHINEN MITTELS THERMISCHEN SPRITZENS**
METHOD FOR PRODUCING A HIGH-QUALITY INSULATION OF ELECTRIC CONDUCTORS OR CONDUCTOR BUNDLES OF ROTATING ELECTRIC MACHINES BY MEANS OF THERMAL SPRAYING
PROCEDE D'OBTENTION D'ISOLATION DE HAUTE QUALITE DE CONDUCTEURS ELECTRIQUES OU DE FAISCEAUX DE CONDUCTEURS DE MACHINES ELECTRIQUES TOURNANTES PAR PROJECTION THERMIQUE

(30) Priorität: 28.12.1999 DE 19963492
(43) Veröffentlichungstag der Anmeldung: 06.11.2002
(73) Patentinhaber: Alstom, 75116 Paris (FR)
(72) Erfinder: BAUMANN, Thomas, CH-5430 Wettingen (CH); FRIED, Reinhaard, CH-5415 Nussbaumen (CH)
(74) Vertreter: Dimper, Dieter
(86) Internationale Anmeldenummer: PCT/CH2000/000681
(87) Internationale Veröffentlichungsnummer: WO 2001/048896

(56) Entgegenhaltungen:
- EP-A- 0 321 223
- US-A- 3 747 853
- US-A- 5 316 801
- PATENT ABSTRACTS OF JAPAN vol. 1999, no. 03, 31. März 1999 (1999-03-31) & JP 10 314658 A (SANKYO SEIKI MFG CO LTD), 2. Dezember 1998 (1998-12-02)
- PATENT ABSTRACTS OF JAPAN vol. 004, no. 121 (E-023), 27. August 1980 (1980-08-27) & JP 55 074345 A (NIPPON DENSO CO LTD), 4. Juni 1980 (1980-06-04)
- PATENT ABSTRACTS OF JAPAN vol. 014, no. 045 (E-0880), 26. Januar 1990 (1990-01-26) & JP 01 274648 A (HITACHI LTD), 2. November 1989 (1989-11-02)

## Beschreibung

### Technisches Gebiet

Die Erfindung bezieht sich auf das Gebiet der Isolierung von rotierenden elektrischen Maschinen. Insbesondere betrifft die Erfindung ein Verfahren zur Herstellung einer hochwertigen Isolierung von Leitern oder Leiterbündeln, wie sie bei rotierenden Maschinen in Form von Statorspulen, Roebelstäben und Erregerleitern Verwendung finden.

### Stand der Technik

Herkömmlich werden auf dem Gebiet der Isolierung von Leitern oder Leiterbündeln von rotierenden elektrischen Maschinen verschiedene Verfahren verwendet.

Bei einem Verfahren werden Bänder bestehend aus einem Glasfaserträger und Glimmerpapier auf einen Statorleiter lagenförmig spiralig aufgewickelt, bis eine gewünschte Isolierdicke erreicht ist. Durch eine anschliessende Imprägnierung in Epoxyharz wird verbleibende Luft aus dem so entstandenen Isolierwickel verdrängt und die Bandlagen werden verklebt. Durch Aushärtung in einer geeigneten Form erhält die Isolierung ihre Endform. Herstellungsbedingt sind die Glimmerplättchen bei diesem Verfahren in Bandrichtung ausgerichtet, so dass daraus in der fertigen Isolierung eine Ausrichtung der Glimmerplättchen parallel zur Leiteroberfläche resultiert.

Gemäss eines weiteren aus der EP 0 660 336 A2 bekannten Verfahrens werden Statorleiter mit Bändern bestehend aus thermoplastischem Kunststoff, gefüllt mit Glimmer, bewickelt. Eine Verfestigung und Formung erfolgt hier durch Heisspressen des bewickelten Statorleiters, wobei es zu Luftverdrängung, Aufschmelzen des Thermoplastes und Verklebung der Wickellagen kommt. Auch bei diesem Verfahren sind die Glimmerplättchen parallel zur Leiteroberfläche ausgerichtet.

Schliesslich kann eine Isolierung des Statorleiters auch durch eine Extrusion mit Thermoplasten ohne Füllstoffe, d.h. auch ohne Glimmer, wie im US-Patent Nr. 5 650 031 beschrieben, erfolgen.

Nunmehr sind die zu isolierenden Leiter von rotierenden elektrischen Maschinen jedoch meist recht komplex geformte Gebilde in der Form von Stäben oder Spulen. Ein gerader Teil der Leiter befindet sich in den Nuten des Stators der Maschine. Dabei bildet ein gebogener Teil der Leiter nach entsprechender Verbindung mit benachbarten Stäben und Spulen einen Wickelkopf, der an beiden Enden aus dem Stator herausragt. Die Länge des geraden Teils kann bei grossen rotierenden Maschinen 6m überschreiten. Problematisch ist bisher, dass Isolierung und Leiter üblicherweise unterschiedliche thermische Ausdehnungskoeffizienten α aufweisen, die im Laufe der Zeit aufgrund von thermischen Spannungen zu Fehlstellen in der Isolierung durch Ablösungen der Isolierung entstehende Hohlräume führen können, und dass bei der Herstellung der Isolierung Fehlstellen, beispielsweise Lufteinschlüsse, entstehen. An derartigen Fehlstellen kann es zu Teilentladungen kommen, die zu einer Schädigung der Isolierung führen. Hierbei sind Teilentladungsaktivitäten im 100 nC-Bereich durchaus üblich.

Ein sicherer Betrieb der Maschinenisolierung ist angesichts dieser Teilentladungsaktivitäten bisher nur durch die Barrierewirkung von senkrecht zur Feldrichtung orientieren Glimmerplättchen möglich. Dadurch wird eine Ausbildung von Durchschlagskanälen aus den Hohlräumen heraus verhindert. Als Obergrenze der dauerhaft zulässigen Betriebsfeldstärke wird dabei allgemein 2,5 bis 2,75 kV/mm angesehen. Ein derartiger Maximalwert wird jedoch von anderen Isoliersystemen der Mittel- bzw. Hochspannungsisolierung zum Teil deutlich übertroffen.

So beträgt beispielsweise das Maximalfeld für einen Dauerbetrieb in Stützisolatoren, bei denen ein Aluminiumoxid-gefülltes Epoxydharz für gasisolierte Schaltungen verwendet wird, 4 kV/mm und dasjenige für Hochspannungskabel, bei denen Polyäthylen verwendet wird, ca. 12 kV/mm. Diesen herkömmlichen Isoliersystemen ist gemeinsam, dass sie unter Betriebsbelastung keine Teilentladung entwickeln. Eine Anwendung dieser Isoliersysteme bei der Maschinenisolierung ist jedoch bei der erfindungsgemässen Anwendung nicht möglich, da dort die Isolierung elektrisch nur schwach belastet ist und daher eine Fehlerfreiheit gemäss der Erfindung nicht ausschlaggebend ist und Fehlstellen daher dort annehmbar sind. Andere herkömmliche Isoliertechniken sind für die durch die erfindungsgemässe Anwendung gestellten Anforderungen nicht geeignet.

Da die derzeit verwendeten herkömmlichen Verfahren und Materialien unter Verwendung von Glimmer zudem im wesentlichen jedoch bereits mehr als 30 Jahre alt sind, sind durch eine Weiterentwicklung dieses Standes der Technik höchstens inkrementelle Verbesserungen zu erwarten. Daher erscheint es kaum möglich, durch Weiterentwicklungen dieses Standes der Technik eine höherwertige Isolierung zu entwickeln, die mit niedrigeren Durchlaufzeiten und geringeren Fertigungskosten im Vergleich zum Stand der Technik, sowie umweltschonend, d.h. ohne Lösungsmittel, ohne Emissionen und ohne eine Erzeugung von Sondermüll hergestellt werden kann und keine Fehlstellen enthält bzw. bei Fehlstellen zu keinen Teilentladungen führen.

### Darstellung der Erfindung

Daher ist es Aufgabe der vorliegenden Erfindung, ein Verfahren zur Herstellung einer hochwertigen Isolierung für Leiter oder Leiterbündel zu schaffen, die eine hohe Qualität aufweist und mit geringen Durchlaufzeiten und geringen Fertigungskosten sowie umweltschonend herstellbar ist.

Erfindungsgemäss wird diese Aufgabe durch Verfahren zur Herstellung einer hochwertigen Isolierung von Leitern oder Leiterbündeln mit den Merkmalen des Patentanspruchs 1 gelöst. In den Unteransprüchen sind vorteilhafte Weiterbildungen der Erfindung angegeben.

Durch dieses erfindungsgemässe Verfahren zur Herstellung einer hochwertigen Isolierung von Leitern oder Leiterbündeln ohne Fehlstellen, die unter Prüf- und Betriebsbelastungen zur Teilentladungen führen können, werden die ausgerichteten Glimmerplättchen nicht mehr benötigt. Dadurch wird sowohl die Wahl der Herstellungsverfahren als auch die der Materialien für die Isolierung sehr erleichtert, da das Einarbeiten von Glimmer in Konzentrationen von mehr als 40 Gewichtsprozent bei vielen Polymeren problematisch ist.

### Kurze Beschreibung der Zeichnung

Nachfolgend wird die Erfindung anhand eines in der Zeichnung dargestellten bevorzugten Ausführungsbeispiels näher erläutert.

### Es zeigen:

Fig. 1 einen Aufbau der erfindungsgemässen Einrichtung zum thermischen Spritzen,
Fig. 2 ein Ablaufdiagramm, das die Durchführung des erfindungsgemässen Verfahrens veranschaulicht und
Fig. 3 einen Schichtaufbau eines mit herkömmlicher thermischer Spritztechnik erzeugten Schichtaufbaus.

### Weg(e) zur Ausführung der Erfindung

Im folgenden wird nun ein Verfahren zur Herstellung einer hochwertigen Isolierung für Leiter oder Leiterbündel von rotierenden elektrischen Maschinen ausführlich beschrieben. Zuerst wird dabei auf den grundsätzlichen Aufbau der Isolierung eingegangen und anschliessend das erfindungsgemässe Verfahren genau erläutert.

Die mit dem erfindungsgemässen Verfahren aufgebrachte Isolierung besteht aus drei Schichten. Die erste Schicht bildet einen Innenglimmschutz, bestehend aus leitfähig oder halbleitfähig gefülltem Polymer. Hierbei wird ein Polymer verwendet, das sich gut mit dem Polymerwerkstoff der darüber folgenden Isolierschicht verbindet. Vorzugsweise wird dasselbe Polymer verwendet, wie in der Isolierschicht.

Der Innenglimmschutz hat - wie bei Hochspannungskabeln - die Aufgabe, elektrische und mechanische Grenzschichten zu entkoppeln. Elektrisch weist der Innenglimmschutz dasselbe Potential wie der darunterliegende metallische Leiter auf, ist also Teil des elektrischen Leiters, mechanisch ist er hingegen Teil der Isolierung. Dadurch ist gewährleistet, dass etwaige Ablösungen zwischen Isolierhülse und Leiter aufgrund von thermischem Wechselspiel teilentladungsfrei sind, da über die Ablösung keine Spannung abfällt.

Das erfindungsgemässe Verfahren zur Herstellung dieser hochwertigen Isolierung für Leiter oder Leiterbündel soll die folgenden Anforderungen erfüllen:
1) Einerseits soll das Herstellungsverfahren weitgehend unabhängig von der jeweiligen Geometrie des Grünstabes bzw. der Grünspule, d.h. des verroebelten, nichtisolierten, verfestigten Stabes oder der Spule, sein.
2) Dabei soll die Isolierung hochwertig sein, d.h. gegenüber dem Stand der Technik einen bessere thermische Festigkeit bis ca. Tₘₐₓ = 180°C aufweisen und ein Maximalfeld für Dauerbetrieb von ca. 5kV/mm schadlos überstehen.
3) Darüber hinaus soll das Verfahren eine Isolierung konstanter Dicke mit einer Toleranz Δd/d < 10% - auch wenn die Toleranzen des Grünstabes bzw. der Grünspule deutlich grösser sind - ermöglichen, wobei Schichtdikken von 0,3 bis 7 mm herstellbar sein sollen.
4) Zur Verkürzung der Herstellungszeit soll die Durchlaufzeit pro Stab bzw. Spule maximal 1 bis 3 Stunden betragen.

Aufgrund dieser durch das erfindungsgemässe Verfahren zu erfüllenden Anforderungen könnte man erwägen, herkömmliche thermische Spritzverfahren als Ausgangspunkt zu verwenden.

Derartige herkömmliche thermische Spritzverfahren sind beispielsweise offenbart in "Moderne Beschichtungsverfahren", Lehrstuhl für Werkstofftechnologie, Universität Dortmund, H. D. Steffens, DGM Informationsgesellschaft Verlag, 2. Auflage, 1996. Thermisches Spritzen umfasst danach laut der DIN EN 657 Verfahren, bei denen Spritzzusätze innerhalb oder ausserhalb von Spritzgeräten an-, auf- oder abgeschmolzen und auf vorbereitete Oberflächen geschleudert werden. Das Auftragen einer Schicht aus Spritzzusätzen kann sowohl im flüssigen als auch im plastischen Zustand erfolgen. Die erzielbaren Schichtdicken erstrecken sich von etwa 10 µm bis hin zu einigen Millimetern. Das Substrat unterliegt im allgemeinen während des Spritzens einer geringen thermischen Belastung mit Oberflächentemperaturen unter 250°C, die mittels geeigneter Prozessführung auch unter 50°C gehalten werden können. Infolgedessen ergeben sich im Hinblick auf die Kombinationsmöglichkeiten von Substratwerkstoff und Spritzzusatz nahezu keine Grenzen.

Nachteilig an den herkömmlichen thermischen Spritzverfahren ist, dass mittels dieser Verfahren hergestellte thermisch gespritzte Schichten eine auf den Auftragsprozess zurückzuführende charakteristische Struktur besitzen, aus der sich ungünstige Eigenschaften ergeben können. Reaktionen während und nach der Flugphase der Teilchen zum Substrat, mechanische Einflüsse bei der Erstarrung und Temperaturgradienten durch die Schichtlagen lassen nämlich eine Struktur entstehen, die durch eine Vielzahl von instabilen und metastabilen Zuständen charakterisiert ist. Thermische Spritzschichten weisen häufig eine lamellare Schichtstruktur auf und sind je nach eingesetztem Spritzverfahren und Spritzzusatzwerkstoff mehr oder weniger porös, mikrorissig, heterogen und anisotrop. Zum Teil sind nicht vollkommen aufgeschmolzene oder vor dem Auftreffen auf die Substratoberfläche schon wieder erkaltete Spritzpartikel und Oxide oder Nitride in der Schicht eingelagert. Darüber hinaus ist bisher lediglich die Anwendung bei Niedrigtemperaturkunststoffen bekannt und realisiert. Darüber hinaus wurde das Verfahren bisher nicht zur Herstellung von mehrschichtigen Strukturen verwendet, bei denen sich die für verschiedene Schichten verwendeten Materialien unterschieden.

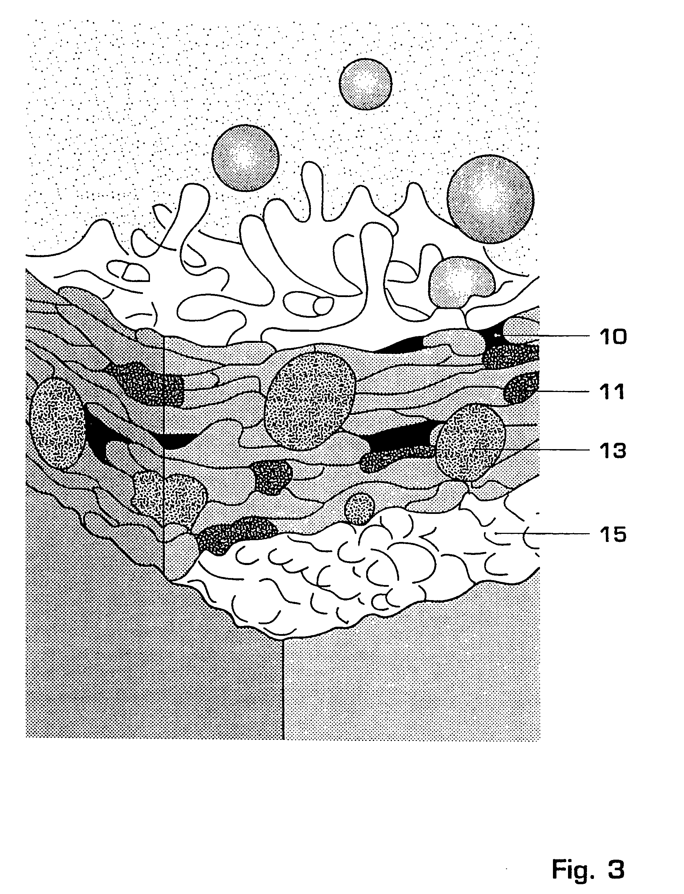

Fig. 3 zeigt die Entstehung einer derartigen thermisch gespritzten Schicht, wobei diese Schicht auf einem Substrat 15 Hohlräume 10, oxidierte Teilchen 11 und nicht geschmolzene Teilchen 13 enthält. Zudem besitzen diese Schichten oftmals geringe Haftfestigkeiten. Erst eine Nachbehandlung von thermisch gespritzten Schichten durch mechanische, thermische sowie thermomechanische Verfahren kann zu einer deutlichen Verbesserung der Schichteigenschaften, wie Porosität, Haftung, Härte und Duktilität sowie des sich einstellenden Eigenspannungszustandes führen.

Der Vorteil des thermischen Spritzens gegenüber den bisher verwendeten Beschichtungstechniken besteht darin, dass der Aufwand an Fertigungstechnologie wesentlich geringer ist und teuere Spezialgeräte, wie beispielsweise Wickelroboter, Vakuum-Druck-Behälter, Einrichtungen zur gekühlten Flüssigharz-Speicherung usw. nicht erforderlich sind und durch handelsübliche Beschichtungsgeräte und Roboter ersetzt werden können. Ausserdem ist diese Technik in weitaus grösserem Masse automatisierbar als das herkömmliche Verfahren. Die Durchlaufzeiten werden erheblich auf nur noch 0,5 bis 3 h verkürzt. Somit können durch Verwendung des thermischen Spritzens Investitionsgüter eingespart, Durchlaufzeiten verringert und ein hoher Grad an Automatisierung erreicht werden.

Daher wird im erfindungsgemässen Verfahren das herkömmliche Verfahren des thermischen Spritzens derart weitergebildet sein, dass, im Gegensatz zum Stand der Technik, eine Leiterisolierung einschliesslich Innen- und Aussenglimmschutz mit Schichten ohne Fehlstellen, die zu Teilentladungen führen könnten, ausgebildet werden können, die zudem auch hohe Temperaturen unbeschadet überstehen.

Im folgenden wird nun zunächst kurz auf die beim erfindungsgemässen Verfahren verwendeten Materialien eingegangen.

Als Spritzzusätze werden im erfindungsgemässen Verfahren anders als im Stand der Technik Hochtemperatur-Kunststoffe mit Füllern aus anorganischen Stoffen eingesetzt. Bei der Auswahl dieser Hochtemperatur-Kunststoffe ist darauf zu achten, dass die Materialien den thermischen Beanspruchungen genügen und in pulverförmiger Form erhältlich sind bzw. sich zu Pulvern geeigneter Korngrössenverteilung konfektionieren lassen. Eine Füllung mit anorganischen Füllstoffen ist prinzipiell wünschenswert zur Verbesserung der Kriechbeständigkeit, zur Verringerung des thermischen Ausdehnungskoeffizienten und zur Verbesserung der Wärmeleitung der Isolierung. Beispiele für Hochtemperatur-Kunststoffe sind einerseits die bekannten Hochleistungs-Thermoplaste (Poly-Ehter-Ether-Keton (PEEK), Poly-Ether-Imid (PEI), Poly-Amid-Imid (PAI), Poly-Imid (PI), Poly-Phenylen-Sulfon (PPSU), Poly-Ether-Sulfon (PES), Poly-Phenylen-Sulfid (PPS), Poly-Phtal-Amid (PPA)) als auch Hochtemperatur-fähige "Engeneering"-Thermoplaste wie Poly-Ethylen-Terephtalat (PET), Poly-Ethylen-Naphtalat (PEN) und einige Polyamide (z.B. PA9, PA46, PPA). Diese "Engeneering"-Thermoplaste besitzen alle einen Schmelzpunkt oberhalb 230°C und eine Formbeständigkeitstemperatur >200°C. Die üblicherweise angegebenen Dauergebrauchstemperaturen der angeführten "Engeneering"-Thermoplaste liegen zwar teilweise unterhalb 180°C, sie sind aber für den Einsatz als Maschinenisolierung nicht relevant. Ebenfalls möglich ist die Verwendung Hochtemperatur-geeigneter Duroplaste. Die Normtests zur Bestimmung dieser Temperaturen benutzen als Kriterium für die mechanische Festigkeit bei erhöhten Temperaturen die Abnahme der Zugfestigkeit. Zugbeanspruchung spielt jedoch bei Maschinenisolierung eine geringe Rolle. Die wichtigste mechanische Anforderung ist die Vermeidung von plastischem Kriechen unter flächenhaftem Druck, wie er von Befestigungselementen, wie beispielsweise Nutkeilen, Abstützungen im Wickelkopf usw., ausgeübt wird. Dauerkriechprüfungen unter 5- bis 10-facher Last bei 180°C zeigten, dass die vorstehend genannten "Engeneering"-Thermoplaste im gefüllten Zustand derartige Belastungen gut überstehen.

Neben Thermoplasten können auch Duroplaste im B-Zustand verwendet werden, also Materialien, welche noch nicht vernetzt und deswegen schmelzfähig sind. Zur vollständigen thermischen Vernetzung benötigen sie eine thermische Nachbehandlung. Ein möglicher Vorteil gegenüber der üblichen Methode Duroplaste als Schicht aufzubringen, dem elektrostatischen Spritzen, besteht darin, dass Teilchen beim thermischen Spritzen heisser als die Staboberfläche sein können. Infolgedessen bilden diese Teilchen einen Flüssigkeitsfilm mit geringerer Viskosität, als es der Staboberflächentemperatur entspricht. Da eine hinreichend niedrige Viskosität für den guten Verlauf des Films wichtig ist, kann so bereits bei moderaten Stabvorwämtemperaturen ein gutes Ergebnis erzielt werden.

Bei Füllern kann auf die bekannten anorganischen Stoffe zurückgegriffen werden. Hierbei sind faserige Füllstoffe, beispielsweise Kurzfaser aus E-Glas oder Quarzglas, oder körnige Füller anwendbar. Bei fasrigen Füllern können Probleme mit der Förderbarkeit und geringere Auftragsraten auftreten. Dann kann jedoch eine Kombination von körnigen bzw. kugeligen mit fasrigen Füllstoffen Abhilfe bringen.

Die Füller brauchen nicht notwendigerweise in das Polymer kompoundiert zu sein. Die Erfahrung zeigt, dass durch das Mahlen des Kompoundgranulates eine weitreichende Phasentrennung auftritt und dann ohnehin wieder ein Zwei-Stoff-Gemenge Füller-Polymer vorliegt. Des weiteren wird bei fasergefüllten Kompounds durch das Mahlen der Faserfüller stark zerkleinert, so dass von den derart verkürzten Fasern keine Verstärkungswirkung mehr resultiert.

Nun wird im folgenden das erfindungsgemässe Verfahren sowie die dafür erforderliche erfindungsmässe Beschichtungseinrichtung zur Isolierung von Leiter bzw. Leiterbündeln genauer beschrieben.

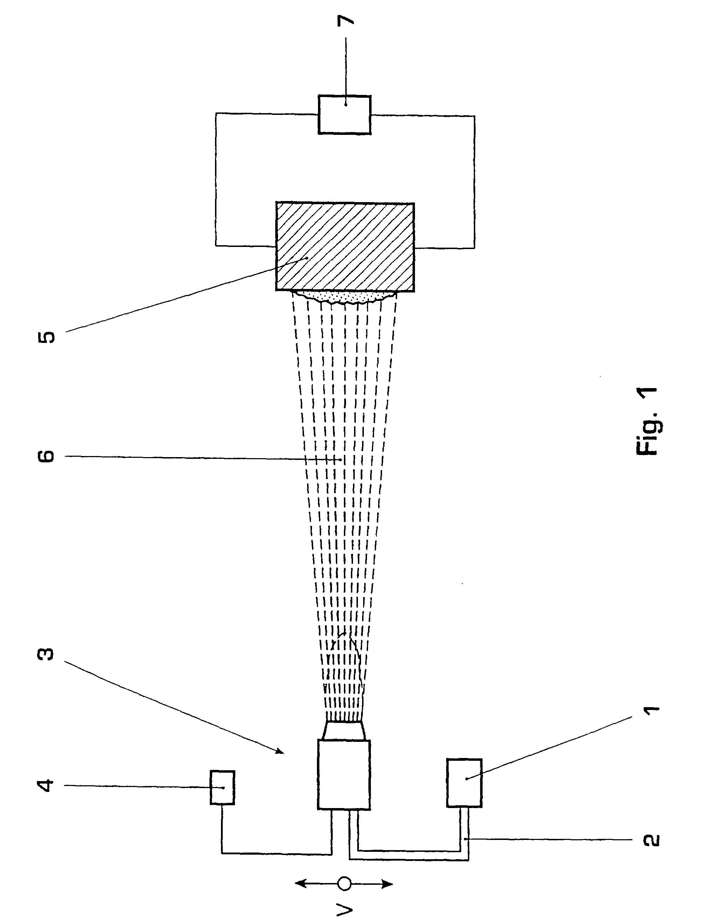

Zunächst wird auf den Aufbau der für die Durchführung des erfindungsgemässen Verfahrens erforderlichen Beschichtungseinrichtung eingegangen, die in Fig. 1 gezeigt ist.

Die Beschichtungseinrichtung umfasst ein Pulvervorratsgefäss 1 sowie eine Pulverfördereinrichtung 2. In dem Pulvervorratsgefass 1 ist ein Hochtemperatur-Kunststoff als Beschichtungsmaterial in pulverförmiger Form untergebracht. Die Pulverfördereinrichtung 2 umfasst eine Einrichtung zur Steuerung eines kontinuierlichen Pulverausstosses des aus dem Pulvervorratsgefäss 1 stammenden Beschichtungsmaterials.

Weiterhin umfasst die Beschichtungseinrichtung eine Sprühpistole 3 mit einer Steuereinrichtung 4, die unter anderem für eine Steuerung der Auftragsmenge des Beschichtungsmaterials, der Bewegungsgeschwindigkeit v der Sprühpistole entlang des zu beschichtenden Gegenstands 5 sowie das Aufschmelzen des verwendeten Beschichtungsmaterials 6 zuständig ist. Von den möglichen Verfahren für das thermische Spritzen, nämlich Laserspritzen, Schmelzbadspritzen, Flammspritzen, Detonationsspritzen, Hochgeschwindigkeitsflammspritzen, Lichtbogenspritzen und Plasmaspritzen, ist für das erfindungsgemässe Verfahren die Verwendung eines Verfahrens mit hoher Partikelgeschwindigkeit geeignet.

Ausserdem umfasst die Beschichtungseinrichtung eine (nicht gezeigte) Stab- bzw. Spulen-Dreh- und Haltevorrichtung. Diese Stab- bzw. Spulen-Dreh- und Haltevorrichtung dient zum Halten der Werkstücke während der Beschichtung. Dabei dienen die nicht zu beschichtenden Partien der Werkstücke, d.h. die Spulenaugen bzw. Stabösen als Haupthaltepunkte für die Stab- bzw. Spulen-Dreh- und Halteeinrichtung, wobei eine Rotation der Werkstücke um die Längsachse die Beschichtung von einem einzelnen Roboter aus vereinfacht. Bevorzugterweise wird die Stab- bzw. Spulen-Dreh- und Halteeinrichtung als zusätzliche Achse des Roboters betrieben.

Zusätzlich weist die Beschichtungseinrichtung eine Stab- bzw. Spulenheizung 7 auf, die das Werkstück während des Beschichtens heizt. Der Sinn dieser Stab- und Spulenheizung 7 besteht darin, dass die ankommenden flüssigen Kunststoffpartikel noch eine Weile flüssig bleiben, um in einen geschlossenen porenfreien Film zu verlaufen. Die hierzu benötigten Temperaturen hängen wesentlich von der Schmelzviskosität ab. Am einfachsten ist die Heizung elektrisch zu bewerkstelligen, wobei entweder eine induktive oder eine resistive Heizung möglich ist. Bei der induktiven Heizung erfolgt die Heizung durch Mittel- oder Hochfrequenzspulen, die um den Leiter angeordnet sind, während eine resistive Heizung durch Anschliessen des Stabs bzw. der Spule an eine Gleichstrom- oder Niederspannung erfolgt.

Beispielsweise für das Flammspritzen oder auch sonst als alternative Ausführungsform weist die Beschichtungseinrichtung zusätzlich noch eine (nicht gezeigte) Einrichtung zur Temperaturüberwachung am Beschichtungsort auf. Diese Einrichtung zur Temperaturüberwachung ist u.a. erforderlich, da die Flamme das Werkstück zusätzlich zur elektrischen Heizung erwärmt bzw. im Falle anderer Beschichtungsverfahren die Oberflächentemperatur mit zunehmender Schichtdicke sinkt. Da die Temperatur des Werkstücks am Beschichtungsort zwar deutlich oberhalb des Schmelzpunktes des Beschichtungsmaterials, jedoch nicht so hoch liegen soll, dass das Polymer thermisch degradiert, wird diese Temperaturüberwachung durchgeführt. Um die Flammtemperatur und die elektrische Heiztemperatur optimal aufeinander abzustimmen, wird eine in situ-Messung der Oberflächentemperatur durchgeführt. Daher wird als Einrichtung zur Temperaturüberwachung beispielsweise ein IR-Messgerät mit kurzer Integrationszeit verwendet.

Zusätzlich zu den vorstehend erwähnten, in Figur 1 dargestellten Einrichtungen weist die Beschichtungseinrichtung einen Spritzroboter auf, der die Bewegung der Spritzpistole entlang des zu beschichtenden Werkstücks, beispielsweise also des Stabs bzw. der Spule durchführt und steuert sowie eine Schallschutz- und Staubkabine zum Schutz der Umgebung vor störenden Geräuschen und zum Schutz der aufgebrachten Beschichtung gegen eine Verunreinigung beispielsweise durch Staubpartikel auf.

Nachstehend wird nun das mittels der vorstehend beschriebenen Beschichtungseinrichtung durchgeführte erfindungsgemässe Verfahren zur Herstellung einer hochwertigen Isolierung von Leitern oder Leiterbündeln beschrieben.

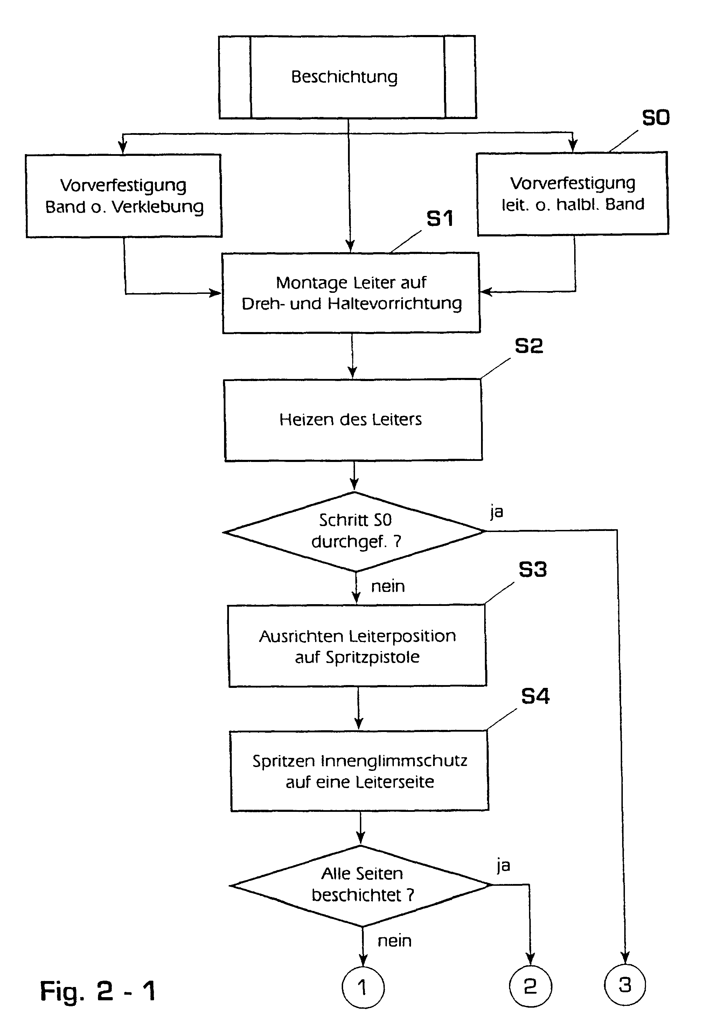

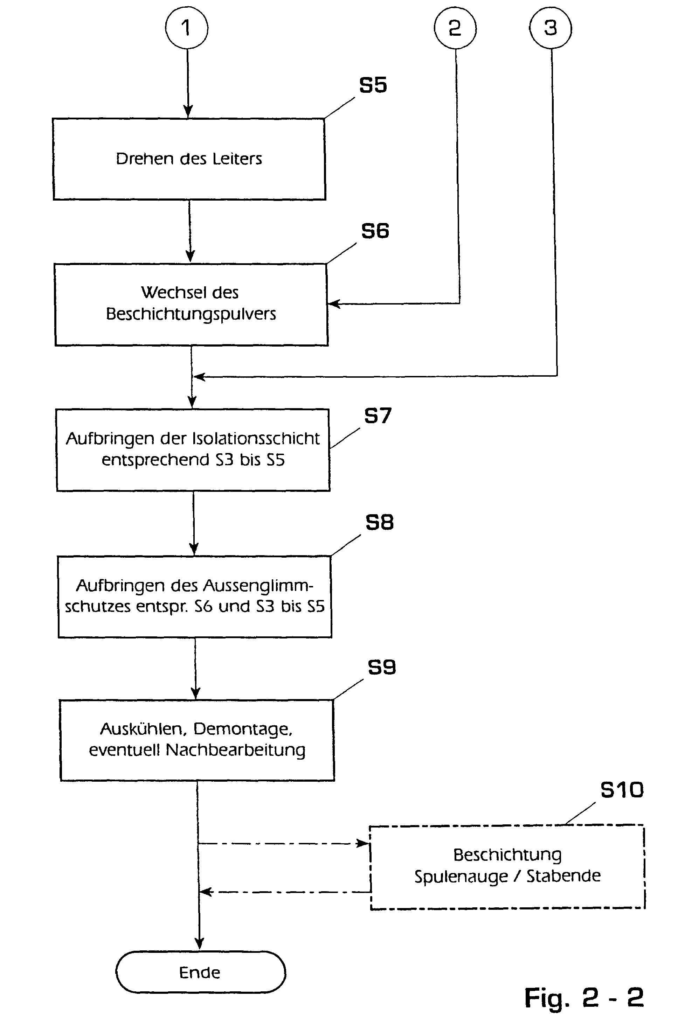

Das erfindungsgemässe Verfahren ist in Fig. 2 in der Form eines Ablaufdiagramms gezeigt und umfasst die folgenden Schritte:
1) Stab- bzw. Spulenmontage auf einer Dreh- und Haltevorrichtung:
   In einem ersten Schritt S1 wird ein zu beschichtender Stab bzw. eine Spule auf einer Dreh- und Halteeinrichtung montiert, die zum Halten des Stabes bzw. der Spule während des Beschichtungsvorgangs sowie zur Drehung der entsprechenden Seite des Stabs bzw. der Spule zu einer Spritzpistole hin dient. Vorteilhafterweise sind der Stab bzw. die Spule dabei durch innere Verklebungen der Leiter oder Umwicklung mit einem Band vorverfestigt (Schritt S0), da dann eine bessere und vor allem stabilere Positionierung auf der Dreh- und Haltevorrichtung 4 gewährleistet ist. Bei grösseren Objekten werden zusätzlich Zwischenabstützungen verwendet, um die Stabilität der Montage zu gewährleisten. Die Drehung der Drehund Haltevorrichtung 4 wird durch eine Steuereinrichtung eines Spritzroboters gesteuert.
2) Anschluss von Stab bzw. Spule an eine elektrische Heizung
   Im folgenden Schritt S2 wird der Stab bzw. die Spule an eine vorstehend beschriebene elektrische Heizung, entweder induktiv oder resistiv angeschlossen und auf die gewünschte Substrattemperatur erwärmt.
3) Ausrichten der Stab- bzw. Spulenposition zur Spritzpistole
   Anschliessend erfolgt in Schritt S3 eine Ausrichtung der Stab- bzw. Spulenposition für einen Spritzbeginn. Die entsprechende Drehung der Drehund Halteeinrichtung 4 wird durch die Steuereinrichtung des Spritzroboters gesteuert, so dass nach Abschluss der Drehung einer der Flachseiten des Stabs bzw. der Spule senkrecht gegenüber zur Spritzpistole angeordnet ist.
4) Spritzen des Innenglimmschutzes
   Im darauf folgenden, ersten tatsächlichen Beschichtungsschritt (Schritt S4) wird der Innenglimmschutz in horizontalen Zick-Zack-Bahnen geeigneter Breite aufgebracht. Hierbei können bei grossen zu beschichtenden Objekten mehrere Spritzpistolen gleichzeitig eingesetzt und durch den Spritzroboter gesteuert werden. Die Zwischenabstützungen fahren im Fall des grossen Objekts gesteuert durch die Steuereinrichtung des Spritzroboters beim Herannahen einer Spritzpistole automatisch weg. Die Schichtdicke wird durch die Pulverfördereinrichtung und die Geschwindigkeit, mit der sich die Spritzpistole entlang des zu beschichtenden Stabs bzw. der Spule bewegt, bestimmt und kann daher durch die Steuereinrichtung des Spritzroboters variiert werden. Bevorzugt beträgt die Spritzdicke pro Spritzdurchgang 0,05 bis 0,2 mm.
5) Drehung von Stab oder Spule
   Nach Beendigung der Beschichtung einer Flachseite erfolgt in Schritt S5 eine Drehung des Stabs bzw. der Spule durch die Dreh- und Halteeinrichtung, wobei diese Drehung durch die Steuereinrichtung des Spritzroboters gesteuert wird. Die nächste zu beschichtende Stab- bzw. Spulenseite wird wiederum senkrecht zur Spritzpistole ausgerichtet.
   Danach werden die vorstehend beschriebenen Schritte S3 und S4 für die weitere Spulenseite durchgeführt. Ebenso wird mit den übrigen zu beschichtenden Seiten von Stab bzw. Spule verfahren. Bei Spulen erfolgt die Wiederholung zusätzlich auch noch für den anderen Spulenschenkel.
   Wenn jedoch in Schritt S0 für eine Vorverfestigung des Stabs bzw. der Spule ein Band verwendet wurde, das mit einer leitfähigen oder halbleitfähigen Schicht versehen ist, entfallen die Schritte S3 bis S5 zur Aufbringung eines Innenglimmschutzes, da dieser bereits durch das Band gebildet wird.
   In der Regel kann die für den Innenglimmschutz erforderliche Beschichtungsdicke in einem einmaligen Durchgang aufgetragen werden. Sollte dies nicht der Fall sein, werden die Schritte S3 bis S5 wiederholt.
6) Wechsel des Beschichtungspulvers
   Anschliessend an die vollständige Beschichtung des Stabs bzw. Leiters mit einem Innenglimmschutz wird in Schritt S6 nun entweder nur das Pulvervorratsgefäss 1 oder die gesamte Spritzanlage einschliesslich Pulvervorratsgefäss 1, Pulverfördereinrichtung 2 und Spritzpistole 3 für den Innenglimmschutz gegen diejenigen für die Isolierschicht ausgetauscht.
7) Beschichtung von Stab bzw. Spule mit der Isolierschicht
   Folgend auf diesen Austausch des Beschichtungsmaterials werden die vorstehend für die Beschichtung mit dem Innenglimmschutz beschriebenen Schritte S3 bis S5 ebenfalls für die Isolierschicht durchgeführt (Schritt S7). Die das Beschichtungsmaterial ist hierbei isolierend gefülltes Pulver. Die Beschichtung erfolgt in einem oder mehr Durchgängen, bis eine gewünschte Isolierdicke erreicht ist. Hierbei kann es erforderlich sein, dass durch die Steuereinrichtung des Spritzroboters eine Nachregelung der Substrattemperatur erfolgt, da die Temperatur der Oberfläche, auf die das flüssige Beschichtungsmaterial trifft, mit zunehmender Dicke des Beschichtungsmaterials abnimmt, wenn die Substrattemperatur nicht nachgeregelt wird.
   Für diese Nachregelung ist eine fortlaufende Erfassung der Oberflächentemperatur des zu beschichtenden Objekts vorteilhaft. Beispielsweise wird die Oberflächentemperatur fortlaufend im Spritzfleck durch eine "schnelle IR-Kamera" gemessen.
   Auf diese Art und Weise können beispielsweise folgende Faktoren, die sich auf die Oberflächentemperatur auswirken berücksichtigt werden:
   - Bei einem langen Verfahrweg L kühlt die Absaugluft die Spritzschicht und das Substrat zu stark ab. Daher muss mit der elektrischen Heizung das Schichtmaterial auf einer geeigneten Temperatur gehalten werden, damit sich die geeignete Temperatur im Spritzfleck einstellen kann. Daher ist zusätzlich zur Kontrolle der Oberflächentemperatur eine "langsamere IR-Kamera" ausgebildet, so dass eine zuverlässige Heizungsregelung erfolgen kann.
   - Bei wachsender Schichtdicke muss für die Herstellung der Beschichtung die geeignete Oberflächentemperatur erhalten werden. Dies bedeutet, dass die Substrattemperatur ständig steigen müsste. Um jedoch eine dadurch bedingte Überhitzung des schon aufgebrachten Schichtmaterials bzw. dessen Wegfliessen zu vermeiden, könnte beispielsweise die Substrattemperatur abgesenkt werden, so dass eine Verfestigung der bereits aufgebrachten substratnahen Schicht erfolgt. Sofern es sich bei dem zu beschichtenden Leiter um einen Hohlleiter handelt, könnte das Abkühlen beispielsweise von innen mit Luft erfolgen. Bei dickeren Leitern jedoch könnte die hohe Wärmekapazität dazu führen, dass das Substrat zu langsam abkühlt.

   Je nach geometrischen Verhältnissen und aufzutragender Schichtdicke kann es nach einem anfänglichen Heizen des Substrates auf die geeignete Substrattemperatur notwendig werden, das Substrat weiter zu heizen, es zu kühlen, die Oberfläche bei jedem Beschichtungsvorgang vorzuheizen oder auch die Spritztemperatur durch eine geringe Änderung der Energiezufuhr zu ändern.
   Grundsätzlich gilt, dass je dicker die gespritzte Schicht wird, wegen der schlechten Wärmeleitung die Oberflächentemperatur um so geringer durch die Substrattemperatur beeinflussbar ist. Daher ist ein abfallender Temperatur-Gradient zum Substrat anzustreben. D.h. die Oberflächentemperatur muss zunehmend von der Beschichtungsseite her geregelt werden, entweder durch Heizen mit einer Flamme oder einem Strahler oder durch Kühlen mit Luft. Als Variation kann eine Regelung der Flammtemperatur durch eine Beeinflussung des Brenngasflusses erfolgen.
   Besonders vorteilhaft ist hierbei eine On-Line-Erfassung der Oberflächentemperatur der unmittelbar im Spritzfleck aufgetragenen Schicht, da dadurch negative Auswirkungen von Parameteränderungen auf das Schichtergebnis verhindert werden können. Beispielsweise kann, sobald die On-Line-Spritzfleck-Temperaturmessung eine Abweichung von einem vorgegebenen Sollwert anzeigt, die sich auf die hergestellte Schicht nachteilig auswirken könnte, während des Spritzens der Schicht der H2-Massenfluss zur Beeinflussung der Energiezufuhr geregelt werden; dabei wird beispielsweise der H2-Massenfluss erhöht, sobald die Temperatur unter einen vorgegebenen Wert fällt, wohingegen sie gesenkt wird, wenn die Temperatur den vorgegebenen Wert überschreitet. Diese Anpassung erfolgt schrittweise. Auf diesem Weg können die gewünschten Prozessparameter einfach eingehalten werden und somit eine gleichbleibende Qualität der Schicht erzielt werden.
8) Beschichtung von Stab bzw. Spule mit einem Aussenglimmschutz
   Anschliessend an die Beschichtung mit Isoliermaterial vorbestimmter Dikke werden wiederum zunächst Schritt S6 (Austausch des Beschichtungsmaterials für die Isolierung gegen das für den Aussenglimmschutz) und anschliessend Schritt S7 mit dem Beschichtungsmaterial zur Herstellung eines Aussenglimmschutzes wiederholt. Dabei besteht das Beschichtungsmaterial für den Aussenglimmschutz aus einem leitfähig gefüllten Polymer.
9) Abschlussschritt:
   In einem abschliessenden, auf die Beschichtung eines Stabes bzw. der Spule folgenden Schritt S9 wird die Beschichtung auskühlen gelassen und anschliessend der Stab bzw. die Spule aus der Dreh- und Haltevorrichtung ausgebaut. Eventuell wird dann noch eine Nachbearbeitung bzw. Nachtemperung der Oberfläche durchgeführt, um thermische Spannungen zwischen der Stab- bzw. Spulenoberfläche, beispielsweise aus Kupfer, und der Isolierung abzubauen. Im Fall von Duroplastbeschichtung kann auf diese Weise eine Nachhärtung erzielt werden.
   Darüber hinaus kann in einem zusätzlichen Schritt S10 eine Beschichtung der Stabenden bzw. Spulenaugen, die während der vorhergehenden Beschichtung als Haltepunkte für die Dreh- und Haltevorrichtung dienten, anschliessend, vor Beendigung des Beschichtungsvorgangs erfolgen.
   Somit kann mit dem erfindungsgemässen Verfahren und der erfindungsgemässen Vorrichtung auf einfache Weise, ohne das Erfordernis zusätzlicher Spezialwerkzeuge und -vorrichtungen, eine Isolierung für Stäbe bzw. Spulen hergestellt werden, die gegenüber dem Stand der Technik kostengünstiger ist und aufgrund fehlender Fehlstellen in der Isolierung eine bessere Teilentladungsfestigkeit aufweist.
   Zusammengefasst offenbart das erfindungsgemässe Verfahren die Herstellung einer hochwertigen Isolierung für Leiter oder Leiterbündel. Bei diesem Verfahren werden Innenglimmschutz, Isolierung und Aussenglimmschutz alle in aufeinanderfolgenden Schritten mittels thermischen Spritzens auf den Leiter oder das Leiterbündel aufgebracht. Die Auftragdicke pro Spritzdurchgang beträgt bis zu 0,2 mm, wodurch die Fehlerfreiheit der Schicht und damit die Vermeidung von Teilentladungen sichergestellt wird. Zudem ist die thermische Belastbarkeit durch die Verwendung von Hochleistungs-Thermoplasten, Hochtemperatur-fähigen "Engeneering"-Thermoplasten sowie von Hochtemperatur-Duroplasten bedeutend verbessert.

## Patentansprüche

1. Verfahren zur Herstellung einer hochwertigen Isolierung von Leitern oder Leiterbündeln, mit den Schritten:
S₁: Montieren eines zu beschichtenden Leiters oder Leiterbündels auf einer Dreh- und Halteeinrichtung,
S₂: Heizen des Leiters oder Leiterbündels auf eine vorbestimmte Substrattemperatur,
S₃: Ausrichten der Leiter- oder Leiterbündelposition mit einer Flachseite senkrecht zu einer Spritzpistole,
S₄: Spritzen eines flüssigen oder plastischen Innenglimmschutzes auf das aufgeheizte Substrat, wobei die Auftragsschichtdicke ungefähr 0,05 bis 0,2 mm beträgt,
S₅: Drehen des Leiters oder Leiterbündels, so dass eine weitere Flachseite des Leiters oder Leiterbündels senkrecht zur Spritzpistole ausgerichtet ist, und anschliessendes Wiederholen der Schritte S3 und S4 sowie Wiederholung dieses Schritts S5, bis alle Leiter- bzw. Leiterbündelseiten beschichtet sind,
S₆: Wechseln des Beschichtungspulvers in ein isolierend gefülltes Pulver,
S₇: Beschichten des Leiters oder Leiterbündels mit dem isolierend gefüllten Pulver in mindestens einem Durchgang auf allen Seiten des Leiters bzw. Leiterbündels entsprechend den Schritten S3 bis S5,
S₈: Durchführen der Schritte S6 und S7 mit einem Beschichtungspulver für einen Aussenglimmschutz, beispielsweise einem leitfähig gefüllten Pulver, und
S₉: Auskühlen lassen und Ausbauen des beschichten Leiters oder Leiterbündels aus der Dreh- und Haltevorrichtung.

2. Verfahren nach Anspruch 1, wobei
als Leiter bzw. Leiterbündel ein Leiterstab, ein Roebelstab oder eine Spule verwendet werden.

3. Verfahren nach Anspruch 1 oder 2, mit dem weiteren Schritt Sₒ Vorverfestigen des Leiters oder Leiterbündels durch eine innere Verklebung der Leiter oder Umwicklung mit einem Band.

4. Verfahren nach Anspruch 3, wobei,
wenn in Schritt S0 zum Verfestigen ein Band mit leitfähiger oder halbleitfähiger Schicht verwendet wird, die Schritte S3 bis S5 zum Aufbringen des Innenglimmschutzes entfallen.

5. Verfahren nach einem der Ansprüche 1 bis 4, wobei
als Beschichtungspulver Hochtemperatur-Kunststoffe mit Füllern aus anorganischen Stoffen verwendet werden.

6. Verfahren nach Anspruch 5, wobei
als Hochtemperatur-Kunststoffe Hochleistungs-Thermoplaste (Poly-Ehter-Ether-Keton (PEEK), Poly-Ether-Imid (PEI), Poly-Amid-Imid(PAI), Poly-Imid (PI), Poly-Phenylen-Sulfon (PPSU), Poly-Ether-Sulfon (PES), Poly-Phenylen-Sulfid (PSU), Poly-Phenylen-Sulfid (PPS), Poly-Phtal-Amid (PPA)) oder Hochtemperatur-fähige "Engeneering"-Thermoplaste wie Poly-Ethylen-Terephtalat (PET), Poly-Ethylen-Naphtalat (PEN) Polyamide (z.B. PA9, PA46, PPA) verwendet werden.

7. Verfahren nach Anspruch 5, wobei
als Hochtemperatur-Kunststoffe Hochtemperatur-Duroplaste verwendet werden.

8. Verfahren nach einem der vorangehenden Ansprüche 1 bis 7, wobei
in den Schritten S3 bis S5 sowie S7 und S8 auf die verschiedenen Leiter- bzw. Leiterbündel-Seiten verschiedene Schichtdicken aufbringbar sind.

9. Verfahren nach einem der vorangehenden Ansprüche 1 bis 8, wobei
in Schritt S2 das Heizen des Substrats durch eine elektrische Heizung, entweder induktiv oder resistiv erfolgt.

10. Verfahren nach einem der vorangehenden Ansprüche 1 bis 9, wobei in Schritt S3 das Ausrichten des Leiters oder Leiterbündels durch eine Steuereinrichtung eines Spritzroboters gesteuert wird.

11. Verfahren nach einem der vorangehenden Ansprüche 1 bis 10, wobei, wenn ein grösserer Leiter oder Leiterbündel zu beschichten ist, mehrere Spritzpistolen gleichzeitig verwendet werden.

12. Verfahren nach einem der vorangehenden Ansprüche 1 bis 11, wobei in Schritt S1 bei grösseren Leitern oder Leiterbündeln Zwischenabstützungen verwendet werden, um eine sichere Positionierung zu gewährleisten.

13. Verfahren nach Anspruch 12, wobei
die Zwischenabstützungen gesteuert durch eine Steuereinrichtung eines Spritzroboters beim Herannahen der Spritzpistole automatisch weggefahren werden.

14. Verfahren nach einem der vorangehenden Ansprüche 1 bis 13, wobei
eine aufgebrachte Schichtdicke durch eine Steuereinrichtung eines Spritzroboters gesteuert wird, indem eine Pulverfördereinrichtung und eine Bewegungsgeschwindigkeit der Spritzpistole entsprechend gesteuert werden.

15. Verfahren nach einem der vorangehenden Ansprüche 1 bis 14, wobei
in Schritt S5 eine Drehung des Leiters oder Leiterbündels derart durchgeführt wird, dass eine weitere Flachseite des Leiters oder Leiterbündels senkrecht zur Spritzpistole ausgerichtet ist.

16. Verfahren nach einem der vorangehenden Ansprüche 1 bis 15, wobei
in Schritt S6 ein Wechseln des Beschichtungspulvers entweder durch Austauschen eines Pulvervorratsgefässes oder einer gesamten Spritzanlage einschliesslich Pulvervorratsgefäss, Pulverfördereinrichtung und Spritzpistole erfolgt.

17. Verfahren nach einem der vorangehenden Ansprüche 1 bis 16, wobei
in Schritt S7 eine Oberflächentemperatur berührungslos überwacht wird und ein Nachregeln der Substrattemperatur ansprechend auf eine erfasste Oberflächentemperatur erfolgt.

18. Verfahren nach einem der vorangehenden Ansprüche 1 bis 17, mit dem zusätzlichen Schritt
nach Abschluss der Leiter- bzw. Leiterbündelbeschichtung und Demontage aus der Dreh- und Haltevorrichtung Beschichten von als Haltepunkte der Dreh- und Haltevorrichtung verwendeten Stabenden bzw. Spulenaugen.

19. Verfahren nach einem der vorangehenden Ansprüche 1 bis 18, wobei, wenn eine grössere Schichtdicke auf den Leiter bzw. das Leiterbündel aufgebracht wurde, die substratnahen Schichten ausserhalb eines Spritzflecks gekühlt werden, damit sich diese Schichten verfestigen und nicht mehr wegfliessen.

## Claims

1. Process for producing a high-quality insulation for conductors or conductor bundles, comprising the steps of:
S1: mounting a conductor or conductor bundle which is to be coated on a rotation and holding device,
S2: heating the conductor or conductor bundle to a predetermined substrate temperature,
S3: orienting the conductor or conductor bundle position with a flat side perpendicular with respect to a spray gun,
S4: spraying a liquid or plastic internal corona-discharge protection onto the heated substrate, the application layer thickness being approximately 0.05 to 0.2 mm,
S5: rotating the conductor or conductor bundle, so that a further flat side of the conductor or conductor bundle is oriented perpendicular to the spray gun, and then repeating steps S3 and S4 and repeating this step S5 until all the sides of the conductor or conductor bundle have been coated,
S6: changing the coating powder into an insulant-filled powder,
S7: coating the conductor or conductor bundle with the insulant-filled powder in at least one pass on all sides of the conductor or conductor bundle as described in steps S3 to S5,
S8: carrying out steps S6 and S7 using a coating powder for an external corona-discharge protection, for example a conductively filled powder, and
S9: allowing the coated conductor or conductor bundle to cool and removing it from the rotation and holding device.

2. Process according to Claim 1, in which a conductor .bar, a transposed bar or a coil is used as conductor or conductor bundle.

3. Process according to Claim 1 or 2, comprising the further step of
S0 prestrengthening the conductor or conductor bundle by internal adhesive bonding of the conductors or by winding a tape around them.

4. Process according to Claim 3, in which, if a tape with a conductive or semiconducting layer is used for strengthening in step S0, the steps S3 and S5 for application of the internal corona-discharge protection are eliminated.

5. Process according to one of Claims 1 to 4, in which high-temperature plastics with fillers comprising inorganic materials are used as coating powder.

6. Process according to Claim 5, in which the high-temperature plastics used are high-performance thermoplastics (polyether ether ketone (PEEK), polyetherimide (PEI), polyamide imide (PAI), polyimide (PI), polyphenylene sulphone (PPSU), polyethersulphone (PES), polyphenylene sulphide (PSU), polyphenylene sulphide (PPS), polyphthalamide (PPA)) or engineering thermoplastics which are capable of withstanding high temperatures, such as polyethylene terephthalate (PET), polyethylene naphthalate (PEN) polyamides (e.g. PA9, PA46, PPA).

7. Process according to Claim 5, in which the high-temperature plastics used are high-temperature thermosets.

8. Process according to one of the preceding Claims 1 to 7, in which in steps S3 to S5 and S7 and S8, different layer thicknesses can be applied to the different sides of the conductors or conductor bundles.

9. Process according to one of the preceding Claims 1 to 8, in which in step S2 the heating of the substrate is carried out by means of electrical heating, either by induction or by resistance.

10. Process according to one of the preceding Claims 1 to 9, in which, in step S3, the orientation of the conductor or conductor bundle is controlled by a control device of a spraying robot.

11. Process according to one of the preceding Claims 1 to 10, in which, if a relatively large conductor or conductor bundle is to be coated, a plurality of spray guns are used simultaneously.

12. Process according to one of the preceding Claims 1 to 11, in which, in step S1, in the case of relatively large conductors or conductor bundles, intermediate supports are used in order to ensure reliable positioning.

13. Process according to Claim 12, in which the intermediate supports are automatically moved away, under the control of a control device of a spraying robot, when the spray gun approaches.

14. Process according to one of the preceding Claims 1 to 13, in which a layer thickness which is applied is controlled by a control device of a spraying robot as a result of a powder-delivery device and a speed of movement of the spray gun being controlled accordingly.

15. Process according to one of the preceding Claims 1 ,to 14, in which, in step S5, rotation of the conductor or conductor bundle is carried out in such a manner that a further flat side of the conductor or conductor bundle is oriented perpendicular to the spray gun.

16. Process according to one of the preceding Claims 1 to 15, in which, in step S6, the coating powder is changed either by exchanging a powder reservoir or an entire spraying installation including powder reservoir, powder-delivery device and spray gun.

17. Process according to one of the preceding Claims 1 to 16, in which, in step S7, a surface temperature is monitored without contact and the substrate temperature is readjusted in response to a recorded surface temperature.

18. Process according to one of the preceding Claims 1 to 17, including the additional step of, after the coating of the conductor or conductor bundle has ended and the conductor or conductor bundle has been removed from the rotation and holding device, coating bar ends or coil eyelets which have been used as holding points for the rotation and holding device.

19. Process according to one of the preceding Claims 1 to 18, in which, if a relatively great layer thickness has been applied to the conductor or the conductor bundle, the layers which are close to the substrate and outside a spraying spot are cooled, so that these layers solidify and no longer flow away.

## Revendications

1. Procédé pour fabriquer une isolation de haute qualité pour des conducteurs ou des faisceaux de conducteurs comportant les étapes suivantes :
S1 : Montage d'un conducteur ou d'un faisceau de conducteurs à revêtir sur un dispositif de rotation et de fixation,
S2 : Chauffage du conducteur ou du faisceau de conducteurs à une température de substrat prédéterminée,
S3 : Alignement d'un côté plat du conducteur ou du faisceau de conducteurs perpendiculairement à un pistolet de pulvérisation,
S4 : Pulvérisation d'une protection anti-effluves intérieure liquide ou plastique sur le substrat chauffé, l'épaisseur de la couche déposée étant d'environ 0, 05 à 0, 2 mm,
S5 : Rotation du conducteur ou du faisceau de conducteurs de manière à aligner un autre côté plat du conducteur ou du faisceau de conducteurs perpendiculairement au pistolet de pulvérisation, puis répétition des étapes S3 et S4, ainsi que répétition de la présente étape S5, jusqu'à ce que tous les côtés du conducteur ou du faisceau de conducteurs soient revêtus,
S6 : Remplacement de la poudre de revêtement par une poudre chargée isolante,
S7 : Revêtement du conducteur ou du faisceau de conducteurs avec la poudre chargée isolante en au moins une passe sur tous les côtés du conducteur ou du faisceau de conducteurs selon les étapes S3 à S5,
S8 : Réalisation des étapes S6 et S7 avec une poudre de revêtement pour une protection anti-effluves extérieure, par exemple avec une poudre chargée conductrice, et
S9 : Refroidissement et démontage du. conducteur ou du faisceau de conducteurs revêtu hors du dispositif de rotation et de fixation.

2. Procédé selon la revendication 1, dans lequel une barre conductrice, une barre Roebel ou une bobine est utilisée comme conducteur ou faisceau de conducteurs.

3. Procédé selon la revendication 1 ou 2, avec l'étape supplémentaire S0 de préconsolidation du conducteur ou du faisceau de conducteurs par collage interne des conducteurs ou enveloppement dans un ruban.

4. Procédé selon la revendication 3, dans lequel, si, dans l'étape S0 de consolidation, un ruban pourvu d'une couche conductrice ou semi-conductrice a été utilisé, les étapes S3 à S5 de dépôt de la protection anti-effluves ne sont pas réalisées.

5. Procédé selon l'une des revendications 1 à 4, dans lequel la poudre de revêtement utilisée se compose de matières plastiques à haute température avec des charges composées de substances inorganiques.

6. Procédé selon la revendication 5, dans lequel les matières plastiques à haute température utilisées sont des thermoplastiques à hautes performances (polyétheréther-cétone (PEEK), polyéther imide (PEI), polyamide imide (PAI), polyimide (PI), polyphénylène sulfone (PPSU), polyéther sulfone (PES), polyphénylène sulfure (PSU), polyphénylène sulfure (PPS), polyphtal amide (PPA)), ou des thermoplastiques "d'ingénierie" capables de résister aux hautes températures, comme le polyéthylène téréphtalate (PET), le polyéthylène naphtalate (PEN) et des polyamides (p. ex. PA9, PA46, PPA).

7. Procédé selon la revendication 5, dans lequel les matières plastiques à haute température utilisées sont des thermodurcissables à haute température.

8. Procédé selon l'une des revendications 1 à 7 précédentes, dans lequel des épaisseurs de couches différentes peuvent être déposées sur les différents côtés du conducteur ou du faisceau de conducteurs au cours des étapes S3 à S5, ainsi que S7 et S8.

9. Procédé selon l'une des revendications 1 à 8 précédentes, dans lequel, lors de l'étape S2, le chauffage du substrat est réalisé par chauffage électrique inductif ou résistif.

10. Procédé selon l'une des revendications 1 à 9 précédentes, dans lequel, lors. de l'étape S3, l'alignement du conducteur ou du faisceau de conducteurs est contrôlé par un dispositif de commande d'un robot de pulvérisation.

11. Procédé selon l'une des revendications 1 à 10 précédentes, dans lequel, s'il faut revêtir un conducteur ou un faisceau de conducteurs plus grand, plusieurs pistolets de pulvérisation sont utilisés simultanément.

12. Procédé selon l'une des revendications 1 à 11 précédentes, dans lequel, dans le cas d'un conducteur ou d'un faisceau de conducteurs plus grand, des supports intermédiaires sont utilisés lors de l'étape S1 pour garantir un positionnement sûr.

13. Procédé selon la revendication 12, dans lequel les supports intermédiaires se dégagent automatiquement, lors de l'approche du pistolet de pulvérisation, de manière commandée par un dispositif de commande d'un robot de pulvérisation.

14. Procédé selon l'une des revendications 1 à 13 précédentes, dans lequel l'épaisseur d'une couche déposée est contrôlée par un dispositif de commande d'un robot de pulvérisation contrôlant eh conséquence un dispositif de transport de poudre et une vitesse de déplacement du pistolet de pulvérisation.

15. Procédé selon l'une des revendications 1 à 14 précédentes, dans lequel, lors de l'étape S5, une rotation du conducteur ou du faisceau de conducteurs est réalisée de sorte à aligner un autre côté plat du conducteur ou du faisceau de conducteurs perpendiculairement au pistolet de pulvérisation.

16. Procédé selon l'une des revendications 1 à 15 précédentes, dans lequel, lors de l'étape S6, un changement de poudre de revêtement s'effectue soit par remplacement d'un réservoir de stockage de poudre, soit par remplacement d'une installation de pulvérisation complète comprenant le réservoir de stockage de poudre, le dispositif de transport de poudre et le pistolet de pulvérisation.

17. Procédé selon l'une des revendications 1 à 16 précédentes, dans lequel, lors de l'étape S7, une température de surface est surveillée sans contact et une régulation de la température du substrat est effectuée en réaction à une température de surface détectée.

18. Procédé selon l'une des revendications 1 à 17 précédentes, avec l'étape supplémentaire de revêtement des extrémités de barres ou des oeillets de bobines ayant servi de points de fixation pour le dispositif de rotation et de fixation, après achèvement du revêtement du conducteur ou du faisceau de conducteurs et démontage hors du dispositif de rotation et de fixation.

19. Procédé selon l'une des revendications 1 à 18 précédentes, dans lequel, dans le cas d'un dépôt d'une épaisseur de couche plus importante sur le conducteur ou le faisceau de conducteurs, les couches proches du substrat situées en dehors d'un point de pulvérisation sont refroidies, afin que ces couches se solidifient et ne s'écoulent plus.
